# EUROPÄISCHE PATENTANMELDUNG

(11) **EP 1 977 918 A1**
(43) Veröffentlichungstag der Anmeldung: **08.10.2008**
(21) Anmeldenummer: 08006706.9
(22) Anmeldetag: 01.04.2008
(51) Int. Cl.: B60H 1/00

(54) **Verfahren zur aussentemperaturabhängigen Innentemperaturregelung einer Klimatisierungsautomatik eines Kraftfahrzeugs**

(30) Priorität: 05.04.2007 DE 102007016510
(71) Anmelder: Omasreiter, Hannes, 89081 Ulm / Donau (DE)
(72) Erfinder: Omasreiter, Hannes, 89081 Ulm / Donau (DE)

(57) **Zusammenfassung**

Die Erfindung betrifft ein Verfahren zur Außentemperaturabhängigen Innentemperaturrelung einer Klimatisierungsautomatik eines Kraftfahrzeugs, wobei die Innentemperaturregelung in Abhängigkeit zumindst einer voreingestellten Temperaturfunktionsregel erfolgt, wobei durch die Temperaturfunktionsregel je nach einer vom Benutzer eingestellten, gewünschten Basistemperatur als Parameter jeder Außentemperatur eine bestimmte Innentemperatur zugeordnet ist.

## Beschreibung

Die Erfindung betrifft ein Verfahren zur außentemperaturabhängigen Innentemperaturregelung einer Klimatisierungsautomatik eines Kraftfahrzeugs.

Ein solches Verfahren ist beispielsweise aus der deutschen Patentschrift DE 42 06 013 C1 bekannt, wobei dort ein zyklisch eingelesener Außentemperaturwert in der dortigen Regelungsvorrichtung geeigneterweise zur Weiterverarbeitung aufbereitet wird.

In heutigen bzw. zukünftigen Anwendungen wäre es wünschenswert, falls entsprechende Innentemperaturregelungen in Abhängigkeit einer gemessenen Außentemperatur weitestgehend automatisiert, flexibel und zuverlässig reproduzierbar stattfinden könnten.

Es ist daher die Aufgabe der vorliegenden Erfindung, ein Verfahren zur außentemperaturabhängigen Innentemperaturregelung einer Klimatisierungsautomatik eines Kraftfahrzeugs vorzusehen, welches die Nachteile des Standes der Technik überwindet und insbesondere ein solches Verfahren vorzusehen, welches zuverlässig und automatisiert eine entsprechende flexible Temperaturregelung ermöglicht, welche dabei auch noch energiesparend erfolgen kann.

Diese Aufgabe wird erfindungsgemäß gelöst mit einem Verfahren mit den Merkmalen gemäß dem Anspruch 1. Bevorzugte Ausführungsformen des erfindungsgemäßen Verfahrens sind in den Unteransprüchen definiert.

Bei dem erfindungsgemäßen Verfahren zur außentemperaturabhängigen Innentemperaturregelung einer Klimatisierungsautomatik eines Kraftfahrzeugs erfolgt die Innentemperaturregelung in Abhängigkeit zumindest einer voreingestellten Temperaturfunktionsregel, wobei durch die Temperaturfunktionsregel je nach einer vom Benutzer eingestellten gewünschten Basistemperatur als Parameter jeder Außentemperatur eine bestimmte Innentemperatur zugeordnet ist. Somit kann durch das erfindungsgemäße Verfahren durch folgen dieser Temperaturfunktionsregel zuverlässig und automatisiert, dabei gleichzeitig energiesparend, eine für die Kraftfahrzeugsinsassen angenehme Temperaturregelung erreicht werden.

Bei dem erfindungsgemäßen Verfahren kann eine sich ohne Klimatisierungsautomatik bei gegebener Außentemperatur ergebende natürliche Innentemperatur des Kraftfahrzeugs als Parameter der zumindest einen voreingestellten Temperaturfunktionsregel dienen. Als natürliche Innentemperatur ist dabei die Temperatur zu verstehen, welche im Innenraum des Kraftfahrzeugs herrschen würde, falls keine Klimatisierung vorhanden bzw. aktiviert wäre.

Generell können bei dem erfindungsgemäßen Verfahren verschiedene voreingestellte Temperaturfunktionsregeln durch den Benutzer auswählbar sein. Dies erhöht die Flexibilität und die Anpassbarkeit des erfindungsgemäßen Verfahrens noch weiter.

Die Erfindung wird im Folgenden anhand der Figuren beispielhaft näher erläutert werden. Es zeigen:
Figur 1 einen schematischen Graph einer Temperaturfunktionsregel gemäß einer bevorzugten Ausführungsform der vorliegenden Erfindung; und
Figur 2 einen schematischen Graph einer weiteren Temperaturfunktionsregel gemäß einer anderen bevorzugten Ausführungsform der vorliegenden Erfindung.

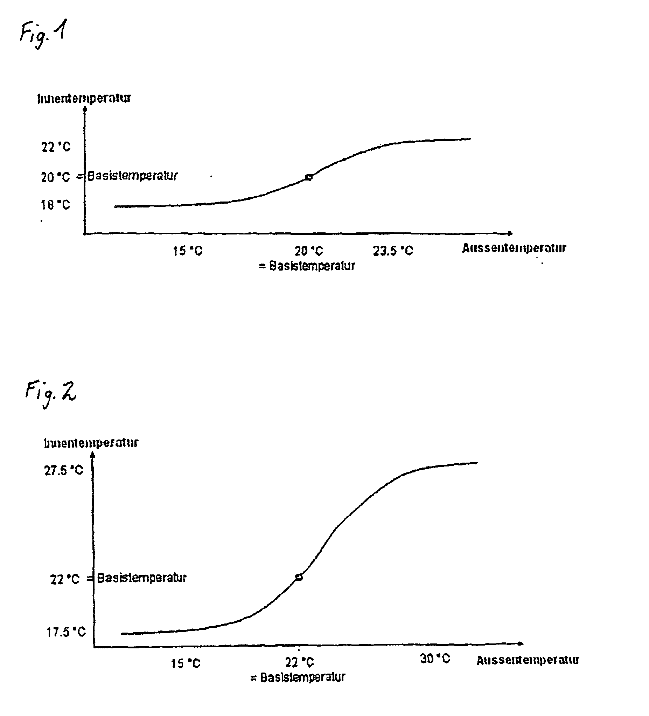

Figur 1 zeigt schematisch einen Graph einer Temperaturfunktionsregel gemäß einer bevorzugten Ausführungsform der vorliegenden Erfindung. Dabei ist einer bestimmten Außentemperatur eine bestimmte Innentemperatur zugeordnet. Die Innentemperaturregelung des erfindungsgemäßen Verfahrens erfolgt dabei in Abhängigkeit der gezeigten Funktion der entsprechenden Temperaturfunktionsregel gemäß Figur 1. Der Verlauf der Funktion der Temperaturfunktionsregel ist dabei eher flach, das heißt bei starker Schwankung der Außentemperatur soll nur eine geringe Schwankung der Innentemperatur vorgegeben sein. Die gewünschte Basistemperatur wird in Figur 1 mit 20°C angenommen .

Figur 2 zeigt eine schematische Ansicht einer weiteren erfindungsgemäßen Temperaturfunktionsregel, dargestellt als Graph, wobei die entsprechende Funktion eine Innentemperatur in Abhängigkeit der gemessenen Außentemperatur vorgibt.

Die Funktion der Temperaturfunktionsregel, wie sie in Figur 2 aufgetragen ist, verläuft mit größeren Abweichungen, d.h. mit größeren Steigungen, als die Funktion der Temperaturfunktionsregel gemäß Figur 1.

Auch dabei ist jedem Außentemperaturwert ein entsprechender Innentemperaturwert zugeordnet.

Einem Benutzer ist es erfindungsgemäß möglich, beispielsweise aus einer der beiden in Figur 1 beziehungsweise Figur 2 gezeigten Temperaturfunktionsregeln auszuwählen.

Generell ist somit erfindungsgemäß eine von den individuell ausgewählten Temperaturfunktionsregeln abhängige Innentemperatureinstellung möglich, welche an die jeweilige Außentemperatur angepasst ist.

## Patentansprüche

1. Verfahren zur Außentemperatur-abhängigen Innentemperaturregelung einer Klimatisierungsautomatik eines Kraftfahrzeugs,
**dadurch gekennzeichnet,**
**dass** die Innentemperaturregelung in Abhängigkeit zumindst einer voreingestellten Temperaturfunktionsregel erfolgt, wobei durch die Temperaturfunktionsregel je nach einer vom Benutzer eingestellten, gewünschten Basistemperatur als Parameter jeder Außentemperatur eine bestimmte Innentemperatur zugeordnet ist.

2. Verfahren gemäß Anspruch 1
**dadurch gekennzeichnet,**
**dass** eine sich ohne Klimatisierungsautomatik bei gegebener Außentemperatur ergebende natürliche Innentemperatur des Kraftfahrzeugs als Parameter der zumindest einen voreingestellten Temperaturfunktionsregel dient.

3. Verfahren gemäß Anspruch 1 oder 2
**dadurch gekennzeichnet,**
**dass** verschiedene voreingestellte Temperaturfunktionsregeln durch den Benutzer auswählbar sind.
